# EUROPÄISCHE PATENTANMELDUNG

(11) **EP 3 461 802 A1**
(43) Veröffentlichungstag der Anmeldung: **03.04.2019**
(21) Anmeldenummer: 18207858.4
(22) Anmeldetag: 29.09.2016
(51) Int. Cl.: C04B 35/10, C04B 35/14, C04B 35/18, C04B 35/185, C04B 35/48, C04B 35/565, C04B 35/626, C04B 35/63, C04B 35/632, C04B 35/66, C04B 35/76, C04B 35/043, C04B 35/101, C04B 35/12, C04B 35/42, C04B 35/482

(54) **FEUERFESTER KERAMISCHER VERSATZ SOWIE EIN VERFAHREN ZUR HERSTELLUNG EINES FEUERFESTEN KERAMISCHEN ERZEUGNISSES**

(62) Teilanmeldung aus: 16191343.9
(71) Anmelder: Refractory Intellectual Property GmbH & Co. KG, 1100 Wien (AT)
(72) Erfinder: Reif, Gerald, 8762 Pölstal (AT); Blajs, Milos, 8605 Kapfenberg (AT); Ully, Stephan, 8010 Graz (AT)
(74) Vertreter: Berkenbrink, Kai-Oliver

(57) **Zusammenfassung**

Die Erfindung betrifft einen feuerfesten keramischen Versatz sowie ein Verfahren zur Herstellung eines feuerfesten keramischen Erzeugnisses.

## Beschreibung

Die Erfindung betrifft einen feuerfesten keramischen Versatz sowie ein Verfahren zur Herstellung eines feuerfesten keramischen Erzeugnisses.

Der Begriff "feuerfestes keramisches Erzeugnis" im Sinne der Erfindung bezeichnet insbesondere feuerfeste Erzeugnisse mit einer Einsatztemperatur von über 600°C und bevorzugt feuerfeste Werkstoffe gemäß DIN 51060: 2000-6, also Werkstoffe mit einem Kegelfallpunkt größer SK 17. Die Ermittlung des Kegelfallpunktes kann insbesondere gemäß DIN EN 993-12: 1997-06 erfolgen.

Mit einem "feuerfesten keramischen Versatz" wird bekanntermaßen eine Zusammensetzung aus einer oder mehreren Komponenten beziehungsweise Rohstoffen bezeichnet, durch die mittels einer Temperaturbehandlung, also insbesondere mittels eines keramischen Brandes, ein feuerfestes keramisches Erzeugnis herstellbar ist.

Zur Verarbeitung des ungebrannten Versatzes weist dieser regelmäßig einen Binder auf, der insbesondere auch in flüssiger Form vorliegen kann. Beim Trocknen oder Aufheizen des Versatzes, beispielsweise während des keramischen Brandes, entweichen flüchtige Bestandteile solch flüssiger Binder zumindest teilweise aus dem Versatz, beispielsweise gasförmig oder in Form von Dampf. Soweit flüchtige Bestandteile solch flüssiger Binder jedoch zu schnell aus dem Versatz entweichen, kann dies zur Beschädigung des Versatzes oder des aus dem Versatz gebrannten feuerfesten keramischen Erzeugnisses führen. Beispielsweise kann ein zu schnelles Entweichen von flüchtigen Bestandteilen solch flüssiger Binder aus dem Versatz zu Abplatzungen oder Rissbildungen in dem daraus hergestellten feuerfesten keramischen Erzeugnis führen, worunter die Einsatzfähigkeit des Erzeugnisses, beispielsweise aufgrund mangelnder Haltbarkeit, leiden kann.

Eine solche Gefahr von Beschädigungen des Versatzes beziehungsweise des daraus gebrannten feuerfesten keramischen Erzeugnisses ergibt sich insbesondere auch bei der Verwendung von Bindern in Form von Kieselsol.

Es hat daher nicht an Versuchen gefehlt, Versätze mit einem Binder in Form von Kieselsol zur Verfügung zu stellen, bei denen die Gefahr einer Beschädigung des Versatzes oder des daraus gebrannten feuerfesten keramischen Erzeugnisses beim Trocknen oder Aufheizen des Versatzes reduziert ist.

Der vorliegenden Erfindung liegt die Aufgabe zu Grunde, einen feuerfesten keramischen Versatz zur Verfügung zu stellen, der einen Binder in Form von Kieselsol umfasst, und bei dessen Trocknung und Aufheizen die Gefahr einer Beschädigung des Versatzes sowie des daraus zu brennenden feuerfesten keramischen Erzeugnisses reduziert ist.

Zur Lösung dieser Aufgabe wird erfindungsgemäß zur Verfügung gestellt ein feuerfester keramischer Versatz, der die folgenden Komponenten umfasst: Eine feuerfeste Grundkomponente, einen Binder in Form von Kieselsol sowie eine alkoholische Komponente in Form eines oder mehrerer mehrwertiger Alkohole. Das Kieselsol liegt dabei in Form einer kolloidalen Suspension von Polykieselsäure in Wasser vor. Ferner beträgt das Massenverhältnis der feuerfesten Grundkomponente zu Polykieselsäure wenigstens 10 und höchstens 55.

Überraschend hat sich erfindungsgemäß herausgestellt, dass ein feuerfester keramischer Versatz, der die vorstehend gestellte Aufgabe löst, zur Verfügung gestellt werden kann, soweit dieser zum Einen die besagte alkoholische Komponente umfasst und zum Anderen die Polykieselsäure des Kieselsols und die feuerfeste Grundkomponente in einem spezifischen Massenverhältnis zueinander vorliegen. Erfindungsgemäß hat sich herausgestellt, dass bei einem Massenverhältnis der feuerfesten Grundkomponente zu Polykieselsäure von wenigstens 10 und höchstens 55 ein Versatz mit einem Binder in Form von Kieselsol zur Verfügung gestellt werden kann, bei dessen Trocknung oder Aufheizen die Gefahr von Beschädigungen des Versatzes oder des daraus zu brennenden feuerfesten keramischen Erzeugnisses reduziert ist.

Dieser Effekt einer reduzierten Beschädigung des Versatzes oder des daraus zu brennenden feuerfesten keramischen Erzeugnisses beim Trocknen oder Aufheizen des erfindungsgemäßen Versatzes ist nach den bisherigen Untersuchungen der Erfinder insbesondere darauf zurückzuführen, dass beim Trocknen oder Aufheizen des erfindungsgemäßen Versatzes flüchtige Anteile des Kieselsols besonders langsam und gleichmäßig entweichen, insbesondere langsamer und gleichmäßiger als bei Versätzen mit einem Binder in Form von Kieselsol, die nicht die erfindungsgemäße Komponente in Form der alkoholischen Komponente umfassen oder bei denen das Massenverhältnis der feuerfesten Grundkomponente zu Polykieselsäure nicht innerhalb des erfindungsgemäßen Bereiches liegt.

Bei Kieselsol handelt es sich bekanntermaßen um eine kolloidale Suspension von aus Siliciumdioxid gebildeter Polykieselsäure in Wasser.

Erfindungsgemäß liegt das Massenverhältnis der feuerfesten Grundkomponente zu Polykieselsäure, also das Verhältnis der Masse der feuerfesten Grundkomponente zur Masse der Polykieselsäure des Binders im erfindungsgemäßen Versatz, im Bereich von 10 bis 55.

Erfindungsgemäß wurde festegestellt, dass aus dem erfindungsgemäßen Versatz bei dessen Trocknung oder Aufheizen flüchtige Bestandteile aus dem Binder zunehmend gleichmäßiger beziehungsweise langsamer entweichen, wenn sich das Massenverhältnis der feuerfesten Grundkomponente zu Polykieselsäure einem sehr spezifischen Bereich von wenigstens 24 und höchstens 34 annähert.

Insoweit kann vorgesehen sein, dass das Massenverhältnis der feuerfesten Grundkomponente zu Polykieselsäure wenigstens 10 beträgt, also insbesondere beispielsweise auch wenigstens 11, 12, 13, 14, 15, 16, 17, 18, 19, 20, 21, 22, 23 oder wenigstens 24.

Insoweit kann ferner vorgesehen sein, dass das Massenverhältnis der feuerfesten Grundkomponente zu Polykieselsäure höchstens 55 beträgt, also insbesondere beispielsweise auch höchstens 52, 48, 44, 40, 36, 35 oder höchstens 34.

Nach einer Ausführungsform ist vorgesehen, dass das Massenverhältnis der feuerfesten Grundkomponente zu Polykieselsäure wenigstens 16 und höchstens 48 beträgt. Nach einer weiteren Ausführungsform ist vorgesehen, dass das Massenverhältnis der feuerfesten Grundkomponente zu Polykieselsäure wenigstens 19 und höchstens 40 beträgt. Nach einer weiteren Ausführungsform ist vorgesehen, dass das Massenverhältnis der feuerfesten Grundkomponente zu Polykieselsäure wenigstens 22 und höchstens 36 beträgt. Schließlich ist nach einer weiteren Ausführungsform vorgesehen, dass das Massenverhältnis der feuerfesten Grundkomponente Polykieselsäure wenigstens 24 und höchstens 34 beträgt.

Bezogen auf die Masse der feuerfesten Grundkomponente des erfindungsgemäßen Versatzes liegt Polykieselsäure beispielsweise in Anteilen im Bereich von 2 bis 8 Masse-% im Versatz vor, also beispielsweise auch in Anteilen von wenigstens 2, 3 oder 4 Masse-% und beispielsweise auch in Anteilen von höchstens 8, 7, 6 oder 5 Masse-%.

Das Massenverhältnis der feuerfesten Grundkomponente zu Kieselsol kann in dem erfindungsgemäßen Versatz beispielsweise wenigstens 5 und höchstens 25 betragen. Insoweit kann das Massenverhältnis der feuerfesten Grundkomponente zu Kieselsol beispielsweise wenigstens 5, 6, 7 oder 8 und beispielsweise höchstens 25, 24, 23, 22, 21, 20, 19, 18, 17, 16, 15, 14, 13, 12 oder 11 betragen.

Erfindungsgemäß wurde festegestellt, dass aus dem erfindungsgemäßen Versatz bei dessen Trocknung oder Aufheizen flüchtige Bestandteile aus dem Binder noch gleichmäßiger beziehungsweise langsamer entweichen, wenn das Massenverhältnis der feuerfesten Grundkomponente zu Kieselsol im Versatz innerhalb dieses Bereiches liegt.

Nach einer Ausführungsform ist vorgesehen, dass das Massenverhältnis der feuerfesten Grundkomponente zu Kieselsol wenigstens 6 und höchstens 20 beträgt. Nach einer Ausführungsform ist vorgesehen, dass das Massenverhältnis der feuerfesten Grundkomponente zu Kieselsol wenigstens 7 und höchstens 15 beträgt. Nach einer weiteren Ausführungsform ist vorgesehen, dass das Massenverhältnis der feuerfesten Grundkomponente zu Kieselsol wenigstens 8 und höchstens 11 beträgt.

Bezogen auf die Masse des Kieselsols, liegt Polykieselsäure beispielsweise in Anteilen im Bereich von 30 bis 50 Masse-% im Kieselsol vor, also beispielsweise auch in Anteilen von wenigstens 30, 31, 32, 33, 34, 35, 36, 37, 38, 39 oder 40 Masse-% und beispielsweise auch in Anteilen von höchstens 50, 49, 48, 47 oder 46 Masse-%. Nach einer Ausführungsform ist vorgesehen, dass der Massenanteil der Polykieselsäure im Kieselsol wenigstens 36 und höchstens 48 beträgt. Nach einer weiteren Ausführungsform ist vorgesehen, dass der Massenanteil der Polykieselsäure im Kieselsol wenigstens 38 und höchstens 46 beträgt.

Erfindungsgemäß hat sich herausgestellt, dass sich die vorteilhaften Eigenschaften des erfindungsgemäßen Versatzes, also insbesondere seine guten Trocknungs- und Aufheizeigenschaften, weiter verbessern lassen, wenn das Massenverhältnis der Polykieselsäure zur alkoholischen Komponente, also das Verhältnis der Masse der Polykieselsäure des Kieselsols zur Masse der alkoholischen Komponente im erfindungsgemäßen Versatz, innerhalb eines spezifischen Bereiches von wenigstens 3 und höchstens 16 liegt. Die Eigenschaften des erfindungsgemäßen Versatzes lassen sich weiter verbessern, wenn sich dieses Massenverhältnis zunehmend einem spezifischen Bereich von wenigstens 4 und höchstens 12 annähert. Insoweit kann vorgesehen sein, dass das Massenverhältnis der Polykieselsäure zur alkoholischen Komponente wenigstens 3, 4 oder 5 und beispielsweise höchstens 17, 16, 15, 14, 13 oder 12 beträgt.

Bezogen auf die Masse der feuerfesten Grundkomponente kann die alkoholische Komponente im erfindungsgemäßen Versatz beispielsweise in einem Anteil im Bereich von 0,2 bis 1,8 Masse-% vorliegen, also beispielsweise auch in einem Anteil von wenigstens 0,2 Masse-%, 0,3 Masse-%, 0,4 Masse-% oder 0,5 Masse-% und beispielsweise auch in einem Anteil von höchstens 1,8 Masse-%, 1,7 Masse-%, 1,6 Masse-%, 1,5 Masse-%, 1,4 Masse-%, 1,3 Masse-%, 1,2 Masse-%, 1,1 Masse-%, 1,0 Masse-%, 0,9 Masse-%, 0,8 Masse-% oder 0,7 Masse-%.

Der erfindungsgemäße Versatz umfasst eine alkoholische Komponente in Form eines oder mehrerer mehrwertiger Alkohole, insbesondere beispielsweise in Form eines oder mehrerer der folgenden mehrwertigen Alkohole: ein oder mehrere zweiwertige Alkohole oder ein oder mehrere dreiwertige Alkohole.

Dreiwertige Alkohole können insbesondere in Form eines oder mehrerer aliphatischer dreiwertiger Alkohole vorliegen, beispielsweise in Form von Glycerin.

Bevorzugt liegt die alkoholische Komponente in Form eines oder mehrerer zweiwertiger Alkohole vor, insbesondere in Form wenigstens eines der folgenden zweiwertigen Alkohole: Monoethylenglycol, Diethylenglycol, 1,2-Propylenglycol, 1,3-Propylenglycol oder Dipropylenglycol.

Besonders bevorzugt liegt die alkoholische Komponente in Form wenigstens eines der folgenden zweiwertigen Alkohole vor: Monoethylenglycol oder Diethylenglycol.

Die feuerfeste Grundkomponente besteht aus einem oder mehreren feuerfesten Rohstoffen. Grundsätzlich kann die feuerfeste Grundkomponente aus einem oder mehreren beliebigen feuerfesten Rohstoffen bestehen, die in feuerfesten keramischen Versätzen vorliegen können. Bevorzugt besteht die feuerfeste Grundkomponente jedoch aus einem oder mehreren nicht-basischen Rohstoffen. Bekanntermaßen basieren nicht-basische Rohstoffe auf wenigstens einem der Oxide SiO₂, Al₂O₃, ZrO₂, Cr₂O₃ oder dem Carbid SiC. Insoweit kann bevorzugt vorgesehen sein, dass die feuerfeste Grundkomponente des erfindungsgemäßen Versatzes aus einem oder mehreren Rohstoffen auf Basis wenigstens eines der folgenden Stoffe besteht: SiO₂, Al₂O₃, ZrO₂, Cr₂O₃ oder SiC.

Diese Stoffe können jeweils in Form von Rohstoffen aus einem dieser Stoffe, beispielsweise Quarz (SiO₂), Quarzglas (SiO₂), Korund (Al₂O₃), Zirkonia (ZrO₂) oder Siliciumcarbid (SiC), und/oder in Form von Rohstoffen aus mehreren dieser Stoffe, beispielsweise Schamotte (SiO₂, Al₂O₃), Mullit (SiO₂, Al₂O₃) oder Zirkon (ZrO₂, SiO₂) vorliegen.

Nach einer Ausführungsform ist vorgesehen, dass die feuerfeste Grundkomponente zu wenigstens 90 Masse-%, bezogen auf die Gesamtmasse der feuerfesten Grundkomponente, aus einem oder mehreren Rohstoffen auf Basis wenigstens eines der folgenden Stoffe besteht: SiO₂, Al₂O₃, ZrO₂, Cr₂O₃ oder SiC.

Nach einer Ausführungsform ist vorgesehen, dass die feuerfeste Grundkomponente einen oder mehrere der folgenden Rohstoffe umfasst: Quarz, Quarzglas, Quarzgut, Mikrosilika, Schamotte, Mullit, mullitreiche Rohstoffe, Andalusit, Porzellanbruch, Bauxit, Sinterkorund, Tonerde, Zirkonia, Zirkon, Kyanit, Silimanit, Chromerz oder SiC. Nach einer Ausführungsform ist vorgesehen, dass die feuerfeste Grundkomponente zu wenigstens 90 Masse-%, bezogen auf die Gesamtmasse der feuerfesten Grundkomponente, aus einem oder mehreren der vorbezeichneten Rohstoffe besteht.

Nach einer Ausführungsform ist vorgesehen, dass die feuerfeste Grundkomponente neben den vorbezeichneten Rohstoffen noch einen oder mehrere der folgenden Rohstoffe umfasst: Tonerdezement, Kohlenstoffträger, Antioxidantien (insbesondere metallische Komponenten, insbesondere wenigstens einen der folgenden Komponenten, bevorzugt in Pulverform: metallisches Aluminium oder metallisches Silizium), Bindeton oder Stahlnadeln. Beispielsweise kann vorgesehen sein, dass die feuerfeste Grundkomponente die vorbezeichneten, weiteren Rohstoffe in einem Anteil im Bereich von 0 bis 10 Masse-%, bezogen auf die Gesamtmasse der feuerfesten Grundkomponente, umfasst, also beispielsweise auch in einem Anteil im Bereich von 1 bis 10 Masse-% oder in einem Anteil im Bereich von 1 bis 5 Masse-%.

Nach einer Ausführungsform ist vorgesehen, dass die feuerfeste Grundkomponente zu wenigstens 90 Masse-%, bezogen auf die Gesamtmasse der feuerfesten Grundkomponente, aus einem oder mehreren der folgenden Stoffe besteht: SiO₂, Al₂O₃, ZrO₂, Cr₂O₃ oder SiC. Wie zuvor ausgeführt, können diese Oxide wiederum in Form der reinen Oxide oder in Form von Verbindungen aus mehrerer dieser Oxide vorliegen.

Erfindungsgemäß hat sich herausgestellt, dass der Versatz auf weitere Komponenten, die neben den vorbezeichneten Komponenten im Versatz vorliegen, sehr empfindlich reagieren kann. Insbesondere können sich durch weitere Komponenten die Trocknungs- und Aufheizeigenschaften des Versatzes verschlechtern. Nach einer Ausführungsform ist daher vorgesehen, dass der Versatz neben den vorbezeichneten Komponenten, also neben der feuerfesten Grundkomponente, dem Binder in Form von Kieselsol sowie der alkoholischen Komponente, weitere Komponenten in einem Anteil unter 10 Masse-% aufweist, also beispielsweise auch in einem Anteil unter 5 Masse-% oder in einem Anteil unter 2 Masse-%, jeweils bezogen auf die Gesamtmasse des Versatzes.

Der erfindungsgemäße feuerfeste keramische Versatz kann grundsätzlich auf beliebige Art und Weise verwendet beziehungsweise zur Herstellung eines feuerfesten keramischen Erzeugnisses behandelt werden. Bevorzugt wird der erfindungsgemäße feuerfeste keramische Versatz zur Herstellung eines ungeformten feuerfesten keramischen Erzeugnisses verwendet, also nach Art eines ungeformten feuerfesten keramischen Werkstoffes, also nach Art einer so genannten feuerfesten keramischen Masse.

Ein Verfahren zur Herstellung eines feuerfesten keramischen Erzeugnisses aus dem erfindungsgemäßen feuerfesten keramischen Versatz umfasst die folgenden Schritte:
Zur Verfügungstellung eines erfindungsgemäßen Versatzes;
Erhitzen des Versatzes zu einem feuerfesten keramischen Erzeugnis.

Besonders bevorzugt wird der erfindungsgemäße Versatz zu einem ungeformten feuerfesten keramischen Erzeugnis gebrannt.

Das Erhitzen des Versatzes kann demnach einen keramischen Brand darstellen, also eine Temperaturbehandlung, bei der die feuerfeste Grundkomponente, also die feuerfesten Rohstoffe des Versatzes, zu einem feuerfesten keramischen Erzeugnis miteinander versintern. Das aus dem erfindungsgemäßen Versatz brennbare feuerfeste keramische Erzeugnis kann demnach ein gesintertes Erzeugnis darstellen.

Der Brand kann bei den jeweils zur Sinterung der Rohstoffe der Grundkomponente geeigneten Temperaturen erfolgen, beispielsweise bei einer Temperatur im Bereich von 1.200 bis 1.600°C, insbesondere beispielsweise bei einer Temperatur im Bereich von 1.250 bis 1.500°C.

Wie zuvor ausgeführt, wird der erfindungsgemäße Versatz bevorzugt nach Art einer feuerfesten Masse behandelt. Insoweit kann bevorzugt vorgesehen sein, dass der Versatz vor seinem Brand nicht geformt, also beispielsweise gepresst wird. Vielmehr kann der Versatz auf eine Oberfläche eines Aggregates, beispielsweise einen Abschnitt der feuerfesten Auskleidung eines Industrieofens, ungeformt aufgebracht und dort anschließend gebrannt werden, insbesondere durch Aufheizen des Aggregates.

Weitere Merkmale der Erfindung ergeben sich aus den Ansprüchen, der nachfolgenden Beschreibung eines Ausführungsbeispiels der Erfindung, den Figuren sowie der zugehörigen Figurenbeschreibung.

Sämtliche Merkmale der Erfindung können, einzeln oder in Kombination, beliebig miteinander kombiniert sein.

Vier Ausführungsbeispiele für einen erfindungsgemäßen Versatz gemäß den nachfolgend beschriebenen Ausführungsbeispielen 1 bis 4 werden nachfolgend näher erläutert.

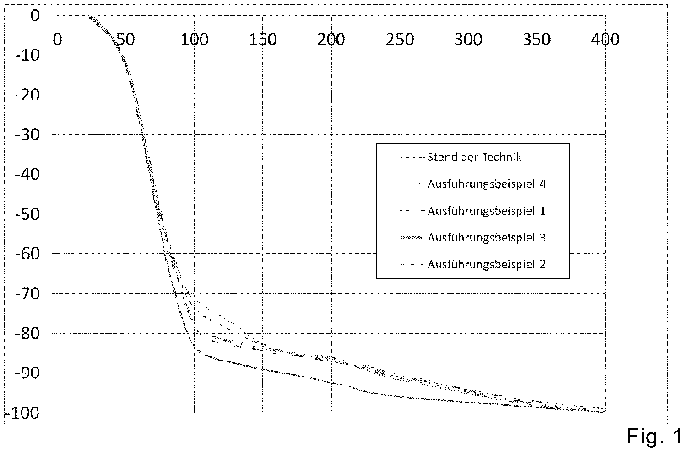

Ferner zeigt
- Figur 1: Trocknungskurven erfindungsgemäßer Versätze gemäß den Ausführungsbeispielen 1 bis 4 sowie die Trocknungskurve für einen nicht erfindungsgemäßen Versatz.

Die Versätze gemäß den Ausführungsbeispielen 1 bis 4 bestanden jeweils aus den folgenden Komponenten: Einer feuerfesten Grundkomponente, einem Binder in Form von Kieselsol, einer alkoholischen Komponente in Form von Monoethylenglycol oder Diethylenglycol sowie Fasern.

Die feuerfeste Grundkomponente bestand jeweils aus den folgenden feuerfesten keramischen Rohstoffen in den folgenden Massenanteilen, jeweils bezogen auf die Gesamtmasse der feuerfesten Grundkomponente:

| | |
|---|---|
| Schamotte (bis 6,30 mm): | 82 Masse-%; |
| Kalzinierte Tonerde: | 16 Masse-%; |
| Mikrosilika: | 2 Masse-%. |

Die Fasern lagen in Form von Polypropylenfasern in einem Massenanteil von 0,05 Masse-%, bezogen auf die Gesamtmasse der feuerfesten Grundkomponente (ohne die Polypropylenfasern), vor.

Ferner lag Kieselsol in den Versätzen gemäß den Ausführungsbeispielen 1 bis 4 in einem Massenanteil von 9,5 Masse-%, bezogen auf die Gesamtmasse der feuerfesten Grundkomponente (ohne das Kieselsol), vor. Das Kieselsol lag in Form einer kolloidalen Suspension von Polykieselsäure in Wasser vor. Der Massenanteil an Polykieselsäure im Kieselsol, bezogen auf die Gesamtmasse des Kieselsols, betrug 40 Masse-%. Demnach lag das Massenverhältnis der feuerfesten Grundkomponente zu Polykieselsäure bei 26,32.

Bezogen auf die Masse der feuerfesten Grundkomponente lag die Polykieselsäure demnach in einem Anteil von 3,8 Masse-% im Versatz vor.

Ferner betrug das Massenverhältnis der feuerfesten Grundkomponente zu Kieselsol demnach 10,53.

Die Versätze gemäß den Ausführungsbeispielen 1 bis 4 unterschieden sich hinsichtlich der Art und des Anteils der darin jeweils vorliegenden alkoholischen Komponente.

So lag in den Versätzen gemäß den Ausführungsbeispielen 1 und 2 jeweils eine alkoholische Komponente in Form von Monoethylenglycol vor, während in den Ausführungsbeispielen 3 und 4 jeweils eine alkoholische Komponente in Form von Diethylenglycol vorlag.

Um eine möglichst gleichmäßige Verteilung der alkoholischen Komponente über den jeweiligen Versatz zu erreichen, wurde die alkoholische Komponente jeweils mit dem Kieselsol gemischt, bevor das Kieselsol anschließend mit den weiteren Komponenten zu den Versätzen gemäß den Ausführungsbeispielen gemischt wurde.

Gemäß Ausführungsbeispiel 1 lag das Monoethylenglycol in einem Anteil von 5 Masse-%, bezogen auf die Masse des Kieselsols ohne das Monoethylenglycol, gelöst im Kieselsol vor. Hieraus resultierte ein Massenverhältnis von Polykieselsäure zu Monoethylenglycol im Versatz von 8.

Gemäß Ausführungsbeispiel 2 lag das Monoethylenglycol in einem Anteil von 10 Masse-%, bezogen auf die Masse des Kieselsols ohne das Monoethylenglycol, gelöst im Kieselsol vor. Hieraus resultierte ein Massenverhältnis von Polykieselsäure zu Monoethylenglycol von 4.

Gemäß Ausführungsbeispiel 3 lag das Diethylenglycol in einem Anteil von 5% Masse-%, bezogen auf die Masse des Kieselsols ohne das Diethylenglycol, gelöst im Kieselsol vor. Hieraus resultierte ein Massenverhältnis von Polykieselsäure zu Diethylenglycol von 8.

Schließlich lag gemäß Ausführungsbeispiel 4 das Diethylenglycol in einem Anteil von 10 Masse-%, bezogen auf die Masse des Kieselsols ohne das Diethylenglycol, gelöst im Kieselsol vor. Hieraus resultierte ein Massenverhältnis von Polykieselsäure zu Diethylenglycol von 4.

Die entsprechend konfektionierten Versätze wurden innig gemischt und anschließend bei einer gleichmäßigen Aufheizrate von etwa 1°C pro Minute bis auf etwa 400°C aufgeheizt.

In Figur 1 sind die entsprechenden Trocknungskurven für die Versätze gemäß den vorbeschriebenen Ausführungsbeispielen 1 bis 4 dargestellt. Dabei ist auf der Abszisse die jeweils erreichte Temperatur und auf der Ordinate der Gewichtsverlust des Versatzes bei Erreichen der auf der Abszisse angegebenen Temperatur, bezogen auf die Gesamtmasse der flüchtigen Bestandteile des Versatzes, aufgetragen. Der Gesamtgewichtsverlust wurde auf 100 % normiert.

Deutlich zu erkennen ist, dass alle vier Versätzen gemäß den Ausführungsbeispielen 1 bis 4 etwa 90 % ihres Gewichtsverlustes bis zu einer Temperatur von etwa 230°C verzeichneten. Dies ist darauf zurückzuführen, dass sich der Großteil der flüchtigen Komponenten des Kieselsols bis zu dieser Temperatur dampfförmig verflüchtigte.

Zum Vergleich der Trocknungseigenschaften der Versätze gemäß den Ausführungsbeispielen 1 bis 4 mit einem Versatz gemäß dem Stand der Technik wurde ein weiterer Versatz hergestellt, der dem Versatz gemäß den Ausführungsbeispielen 1 bis 4 weitgehend entsprach, jedoch mit dem einzigen Unterschied, wonach der Versatz gemäß dem Vergleichsbeispiel keine alkoholische Komponente aufwies.

Wie sich der Trocknungskurve zu diesem Versatz aus Figur 1 entnehmen lässt (bezeichnet mit "Stand der Technik"), verzeichnete dieser Versatz etwa 90 % seines Gewichtsverlustes bereits bis zu einer Temperatur von etwa 160°C.

Bei einem Aufheizen geben die erfindungsgemäßen Versätze gemäß den Ausführungsbeispielen 1 bis 4 den Großteil ihrer verflüchtigbaren Bestandteile des Binders damit langsamer ab als der Versatz gemäß dem Vergleichsbeispiel, womit bei den erfindungsgemäßen Versätzen gemäß den Ausführungsbeispielen 1 bis 4 die Gefahr einer Beschädigung der Versätze oder der daraus herzustellenden feuerfesten keramischen Erzeugnisse deutlich reduziert ist.

## Patentansprüche

1. Feuerfester keramischer Versatz umfassend die folgenden Merkmale:
1.1 Der Versatz umfasst die folgenden Komponenten:
1.1.1 Eine feuerfeste Grundkomponente;
1.1.2 einen Binder in Form von Kieselsol;
1.1.3 eine alkoholische Komponente in Form eines oder mehrerer mehrwertiger Alkohole;
1.2 das Kieselsol liegt in Form einer kolloidalen Suspension von Polykieselsäure in Wasser vor;
1.3 das Massenverhältnis der feuerfesten Grundkomponente zu Polykieselsäure beträgt wenigstens 10 und höchstens 55.

2. Versatz nach Anspruch 1, wobei das Massenverhältnis der feuerfesten Grundkomponente zu Polykieselsäure wenigstens 16 und höchstens 48 beträgt.

3. Versatz nach wenigstens einem der vorhergehenden Ansprüche, wobei das Massenverhältnis der feuerfesten Grundkomponente zu Polykieselsäure wenigstens 19 und höchstens 40 beträgt.

4. Versatz nach wenigstens einem der vorhergehenden Ansprüche, wobei das Massenverhältnis der feuerfesten Grundkomponente zu Polykieselsäure wenigstens 24 und höchstens 34 beträgt.

5. Versatz nach wenigstens einem der vorhergehenden Ansprüche, wobei das Massenverhältnis der feuerfesten Grundkomponente zu Kieselsol wenigstens 5 und höchstens 25 beträgt.

6. Versatz nach wenigstens einem der vorhergehenden Ansprüche, mit mehrwertigen Alkohole in Form eines oder mehrerer der folgenden mehrwertigen Alkohole: Ein oder mehrere zweiwertige Alkohole oder ein oder mehrere dreiwertige Alkohole.

7. Versatz nach wenigstens einem der vorhergehenden Ansprüche, mit mehrwertigen Alkohole in Form eines oder mehrerer zweiwertiger Alkohole.

8. Versatz nach wenigstens einem der vorhergehenden Ansprüche mit zweiwertigen Alkohole in Form wenigstens eines der folgenden zweiwertigen Alkohole: Monoethylenglycol, Diethylenglycol, 1,2-Propylenglycol, 1,3-Propylenglycol oder Dipropylenglycol.

9. Versatz nach wenigstens einem der vorhergehenden Ansprüche mit zweiwertigen Alkoholen in Form wenigstens eines der folgenden zweiwertigen Alkohole: Monoethylenglycol oder Diethylenglycol.

10. Versatz nach wenigstens einem der vorhergehenden Ansprüche, wobei das Massenverhältnis der Polykieselsäure zur alkoholischen Komponente wenigstens 3 und höchstens 16 beträgt.

11. Versatz nach wenigstens einem der vorhergehenden Ansprüche, wobei die feuerfeste Grundkomponente aus einem oder mehreren Rohstoffen auf Basis wenigstens eines der folgenden Stoffe besteht: SiO₂, Al₂O₃, ZrO₂, Cr₂O₃ oder SiC.

12. Versatz nach wenigstens einem der vorhergehenden Ansprüche, wobei die feuerfeste Grundkomponente zu wenigstens 90 Masse-% aus einem oder mehreren der folgenden Oxide besteht: SiO₂, Al₂O₃, ZrO₂, Cr₂O₃ oder SiC.

13. Verfahren zur Herstellung eines feuerfesten keramischen Erzeugnisses, umfassend die folgenden Merkmale:
13.1 Zur Verfügungstellung eines Versatzes nach wenigstens einem der vorhergehenden Ansprüche;
13.2 Erhitzen des Versatzes zu einem feuerfesten keramischen Erzeugnis.
